# EUROPEAN PATENT SPECIFICATION

(11) **EP 2 934 169 B1**
(45) Date of publication and mention of the grant of the patent: **08.02.2017**
(21) Application number: 13805923.3
(22) Date of filing: 17.12.2013
(51) Int. Cl.: A23G 9/10, A23G 9/22, A23G 9/26, A23G 9/04

(54) **METHOD FOR OPTIMIZATION OF EXTRACTION OF FROZEN MOULDED PRODUCTS**
VERFAHREN ZUR OPTIMIERUNG DER EXTRAKTION VON GEFRORENEN FORMPRODUKTEN
PROCÉDÉ D'OPTIMISATION DE L'EXTRACTION DE PRODUITS MOULÉS CONGELÉS

(30) Priority: 19.12.2012 DK 201270798
(43) Date of publication of application: 28.10.2015
(73) Proprietor: Tetra Laval Holdings & Finance S.A., 1009 Pully (CH)
(72) Inventor: HENRIKSEN, Alex, 8700 Horsens (DK)
(74) Representative: Tetra Pak - Patent Attorneys SE
(86) International application number: PCT/EP2013/076941
(87) International publication number: WO 2014/095893

(56) References cited:
- WO-A1-2008/128023
- WO-A1-2008/131770
- GB-A- 1 236 838
- US-A1- 2009 288 429

## Description

The present invention relates to a method and a system for controlling the extraction of frozen moulded products, such as edible ice cream products, from a freezing apparatus comprising a mould table with a plurality of freezing pockets.

### Background of the invention

When producing frozen moulded products, it is a common practice to fill a pre-product, such as an ice cream mix, to be frozen into a plurality of freezing pockets arranged in a mould table of a freezing apparatus and then to expose the freezing pockets to a low temperature, for instance by using cold brine, for freezing the pre-product therein to produce the frozen moulded products.

In order to release the frozen moulded products from the freezing pockets, when the frozen moulded products are to be extracted therefrom, it is also a common practice shortly to expose the freezing pockets to a higher temperature, for instance by using a warm brine, for thawing the outermost surface layer of the frozen moulded products.

This surface thawing process is a very critical part of the production process. If the surface layer of the frozen moulded product is not thawed sufficiently, the frozen moulded products may be destroyed when attempting to extract them from the freezing pockets, because some parts of the frozen moulded products may stick to the freezing pockets and, thus, will be left therein when the remaining parts of the frozen moulded products are extracted. This, in turn, results in a large amount of production waste and in increased work related to cleaning of the freezing pockets before they can be filled again.

If, on the other hand, the freezing pockets are exposed to too much heat during the surface thawing process and too much of the outermost surface of the frozen moulded products are thawed, the appearance and/or the quality of the resulting frozen moulded products may be affected because the surface layers may be damaged due to excessive thawing. Furthermore, more energy is consumed by the production process, not only for heating the freezing pockets during the surface thawing process but also for cooling them down again for the following freezing process after having filled them with another portion of pre-product to be frozen. Also, excessive heating during the surface thawing process causes an increased thermal stress of the mould table due to the repeated cycle of heating and cooling which, in severe cases, may result in fractures in the mould table due to fatigue.

In freezing apparatuses known in the art, it requires skilled and experienced operators to ensure that the surface thawing process is performed optimally, so that neither insufficient nor excessive thawing of the outermost surface of the frozen moulded products takes place before the extraction of those products. Typically, the temperature of the warm brine is set a bit higher than necessary to make sure that the frozen moulded products do not stick to the freezing pockets when they are extracted therefrom.

WO 2008/131770 A1, published on 6 November 2008, discloses a method for controlling the extraction of frozen moulded products from a freezing apparatus, comprising the steps of: - filling a pre-product to be frozen into the freezing pockets in the mould table, - converting the pre-product into frozen moulded products by exposing the freezing pockets to a cooling medium, and - gripping one or more of the frozen moulded products by means of an extraction system. WO 2008/128023 A1 published on 23 October 2008, discloses a method for extracting a portion of frozen confection from a container, said removed frozen confection being then placed into a dispenser, the method of removing frozen confection characterized in that the extracting system comprises a controller configured to adjust the applied force from the extruder and control the timing and amount of applied power to the heater or the temperature within the storage container. However, this method is not aiming at de-moulding frozen confections from a mould table.

### Brief description of the invention

It is an object of the present invention to provide a freezing apparatus with a higher degree of automated control so that less demand is put on the operator but high-quality products can still be obtained.

The present invention relates to a method for controlling the extraction of frozen moulded products, such as edible ice cream products, from a freezing apparatus comprising a mould table with a plurality of freezing pockets, said method comprising the steps of: filling a pre-product to be frozen into the freezing pockets in the mould table, converting the pre-product into frozen moulded products by exposing the freezing pockets to a cooling medium, gripping one or more of the frozen moulded products by means of an extraction system being driven by a driving arrangement comprising, for instance, one or more servo motors, extracting the one or more frozen moulded products from the freezing pockets while measuring one or more torque or force values exerted by the driving arrangement, and feeding back the one or more measured torque or force values for controlling one or more operational parameters of the freezing apparatus.

Feeding back measured torque or force values for controlling operational parameters of the freezing apparatus allows for a more automated optimization of the production process and reduces the dependency on skilled operators of the freezing apparatus for obtaining frozen moulded products of the desired optimum quality.

In an embodiment of the invention, the method further comprises a step of inserting a stick into the pre-product in each of the freezing pockets during the freezing process.

Inserting a stick into the pre-product during the freezing process results in a frozen moulded product, which may be easily handled by gripping the stick and using it as a handle for holding the product.

In an embodiment of the invention, the extraction system grips each of the frozen moulded products by the respective stick.

Using the sticks as handles for holding the products is advantageous, not only for the consumer but also for the machinery during the production of the frozen moulded products.

In an embodiment of the invention, the mould table is a rotating mould table.

In an embodiment of the invention, the mould table comprises an in-line system of lamellae with freezing pockets arranged to be conveyed through a cooling section and a heating section of the freezing apparatus.

For production purposes, it has proven to be advantageous to use a rotating or otherwise moving mould table, so that filling systems and extractions systems of the freezing apparatus can be stationary, while the freezing pockets passes by these systems due to the rotation or motion of the mould table.

In an embodiment of the invention, the one or more measured torque or force values include the maximum torque or force exerted by the driving arrangement during the extraction process.

The maximum torque or force exerted by the driving arrangement is useful as input for a control system, because the torque or force necessary to extract the frozen moulded products from the freezing pockets is a very good indicator of the quality of the frozen moulded products, especially when it comes to the appearance and quality of the surface of these products.

In an embodiment of the invention, the method further comprises a step of loosening the frozen moulded products from the freezing pockets by exposing the freezing pockets to a heating medium.

Using a heating medium, such as a warm fluid medium, for thawing the outer surfaces of the frozen moulded products has shown to be a reliable and feasible way of facilitating the extraction of these products from the freezing pockets.

In an embodiment of the invention, the one or more controlled operational parameters include the temperature of the heating medium.

In an embodiment of the invention, the one or more controlled operational parameters include the flow rate of the heating medium.

In an embodiment of the invention, the one or more controlled operational parameters include the period of time during which the freezing pockets are exposed to the heating medium.

The correct degree of thawing of the outer surfaces of the frozen moulded products can be obtained by controlling the temperature and the flow rate of the heating medium and/or the period of time during which the freezing pockets are exposed to the heating medium appropriately.

In an embodiment of the invention, wherein the one or more controlled operational parameters include the time spent from the pre-product is filled into a freezing pocket to the end of the exposure of that freezing pocket to a cooling medium.

The correct degree of freezing of the frozen moulded products can be obtained by controlling the time used for freezing the pre-product into the frozen moulded product, i.e. by controlling the length of the period of time in which the freezing pockets are exposed to the cooling medium.

In an embodiment of the invention, the time spent is controlled by regulating a speed of a moving mould table.

A simple way of controlling the length of the period of time in which the freezing pockets are exposed to the cooling medium is by regulating the speed of a moving mould table, which has a direct influence on the time spent from a given freezing pocket passes a filling system and a pre-product is filled into the freezing pocket unto the same freezing pocket passes an extraction system and a frozen moulded product is extracted from the freezing pocket.

In an embodiment of the invention, the one or more controlled operational parameters include the temperature of the cooling medium.

The temperature of the cooling medium is another important factor when controlling the process for obtaining a correct degree of freezing of the frozen moulded products.

In an embodiment of the invention, the control of the one or more operational parameters are performed in such a way that the one or more measured torque or force values are kept within ranges, which are calculated taking into account certain product-specific parameters, such as the size and shape of the products and the material from which the products are made.

In an embodiment of the invention, an algorithm for controlling the one or more operational parameters takes into account certain product-specific parameters, such as the size and shape of the products and the material from which the products are made.

Using product-specific parameters as basis for the ranges within which the measured torque or force values are allowed to vary and as basis for the control algorithms enables the control system to be optimized for production of the specific products being produced.

In an embodiment of the invention, the control of the one or more operational parameters is performed using a commonly used control loop feedback mechanism, such as PID control or PI control.

In an aspect of the invention, it relates to a method for controlling a production of frozen moulded products, such as edible ice cream, said method comprising the steps of: capturing torque or force values generated when extracting said frozen moulded products from freezing pockets and based on said torque or force values, adapting any one or a combination of the following parameters based on said torque or force values: a temperature of a cooling medium for freezing said frozen moulded products, a period of time for freezing said frozen moulded products using said cooling medium, a temperature and/or a flow rate of a heating medium for heating surfaces of said freezing pockets, such that extraction of said frozen moulded products are facilitated, or a period of time for heating said surfaces of said freezing pockets using said heating medium.

In an aspect of the invention, it relates to a freezing apparatus for production of frozen moulded products, such as edible ice cream products, said freezing apparatus comprising a mould table with a plurality of freezing pockets, a filling system arranged for filling a pre-product to be frozen into the freezing pockets, a cooling system arranged for exposing the freezing pockets to a cooling medium, and an extraction system for gripping one or more of the frozen moulded products and extracting them from the freezing pockets, said extraction system being driven by a driving arrangement comprising, for instance, one or more servo motors, wherein the driving arrangement is arranged for measuring one or more torque or force values exerted by the driving arrangement and for feeding back the one or more measured torque or force values for controlling one or more operational parameters of the freezing apparatus.

In an aspect of the invention, it relates to a computer program product stored on a computer readable medium comprising software instructions performing one or more of the methods described above.

### Figures

In the following, an exemplary embodiment of the invention is described in more detail with reference to the figures, of which
- Fig. 1: is a partly sectioned perspective view of a freezing apparatus according to an embodiment of the invention,
- Fig. 2: is an enlargement of the sectioned part of the perspective view in fig. 1, and
- Fig. 3: shows another enlarged part of the same freezing apparatus together with extracting means for carrying out a method according to an embodiment of the invention.

### Detailed description

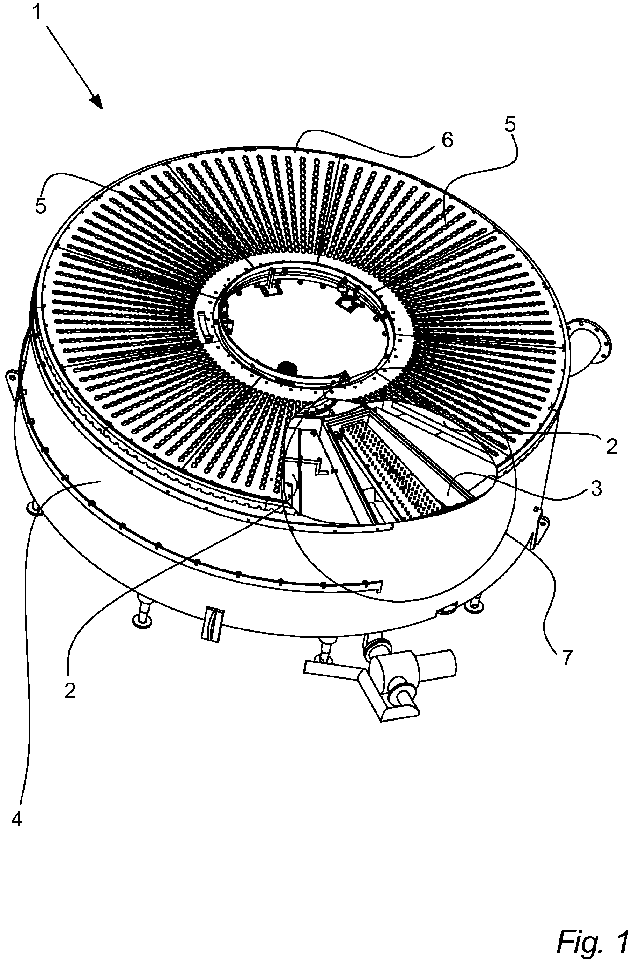

Fig. 1 illustrates, in a partly sectioned perspective view, a freezing apparatus 1 according to an embodiment of the invention.

The freezing apparatus 1 is provided with a plurality of freezing pockets 5 arranged in and extending downwards from a rotating mould table 6.

During a full rotation of the mould table 6, a given freezing pocket 5 will travel through a cold brine section 2 of the freezing apparatus 1 for the most of the time and through a warm brine section 3 for a short time.

Shortly after a given freezing pocket 5 has entered the cold brine section 2, it is filled with a pre-product to be frozen (not shown). As the freezing pockets 5 travel through the cold brine section 2, they are exposed to a low temperature, for instance by pumping turbulent cold brine from a brine tank 4 to the underside of the mould table 6 and, thereby, to the outside of the freezing pockets 5. This means that the pre-product inside the freezing pockets 5 is frozen, and a frozen moulded product 8 is obtained in each of the freezing pockets 5.

In order to release the frozen moulded products 8 from the freezing pockets 5, the freezing pockets 5 pass through a warm brine section 3 of the freezing apparatus 1, in which they are exposed to a higher temperature so that the outermost surface layer of the frozen moulded products 8 thaws.

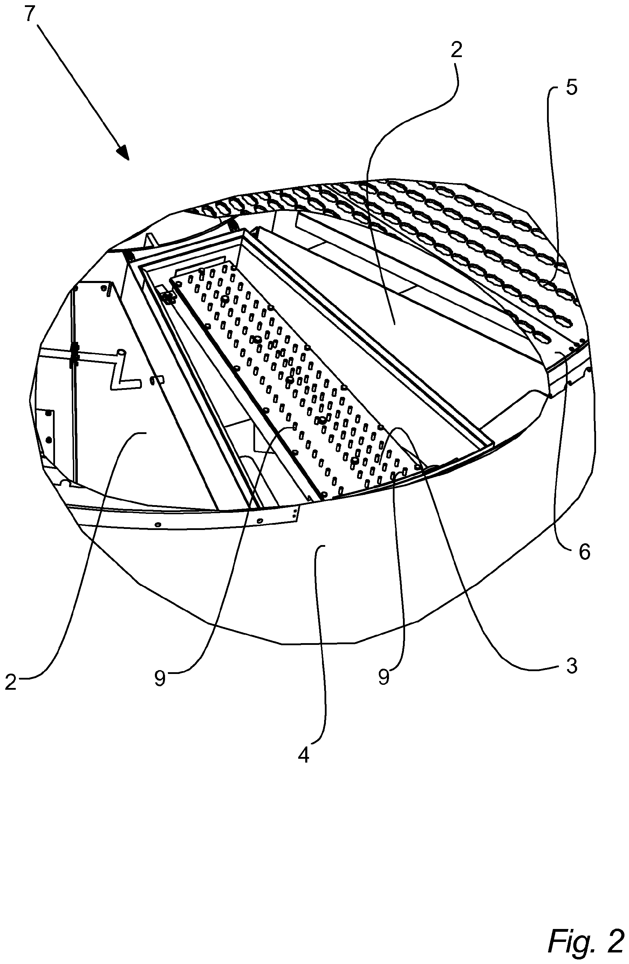

In the enlarged illustration in Fig. 2, it can be seen how the freezing apparatus 1 is equipped with a plurality of spray nozzles 9 in the warm brine section 3 for spraying warm brine onto the underside of the mould table 6 and the outside of the freezing pockets 5 for thawing the outermost surface layer of the frozen moulded products 8 therein.

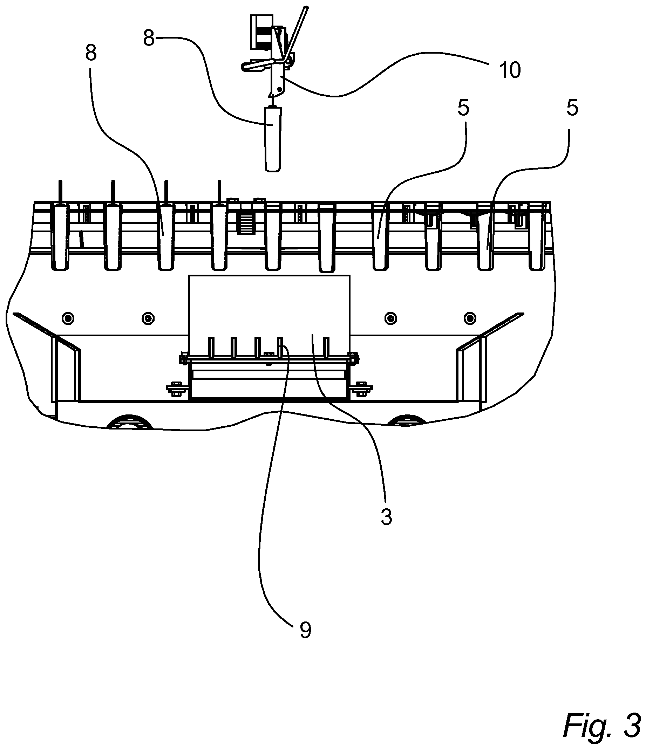

Fig. 3 shows schematically how the frozen moulded products 8 are gripped by extractor tongs 10 and extracted from the freezing pockets 5 when passing through the warm brine section 3.

In the illustrated embodiment, a stick has been put into the pre-product in each of the freezing pockets 5 at an appropriate time during the freezing process so that the sticks may be used by the extractor tongs 10 for gripping the frozen moulded products 8 when extracting them from the freezing pockets 5. Later, the same stick may be used for holding the frozen moulded product 8, for instance by a consumer eating the frozen moulded product 8.

The torque or force necessary to extract the frozen moulded products 8 from the freezing pockets 5 is a very good indicator of the degree to which the outermost surface layer of the frozen moulded product 8 is thawed. If the thawing is insufficient, the frozen moulded product 8 or parts thereof may stick to the freezing pocket 5, and a larger torque or force than expected is required to extract the frozen moulded product 8 or, in the worst case, to tear it apart when trying to extract it. If, on the other side, excessive thawing has taken place, the torque or force required to extract the frozen moulded product 8 will be lower than expected.

Thus, a measurement of the torque or force, such as for instance the maximum torque or force, exerted by a driving arrangement driving the extraction system 10 of the freezing apparatus 1, can be used for controlling the operational parameters of the freezing apparatus in order to ensure an optimal surface thawing process without neither insufficient nor excessive thawing of the outermost layer of the frozen moulded products 8 within the freezing pockets 5.

The ability of the frozen moulded products 8 to be extracted from the freezing pockets 5 depends not only on the thawing process but also on the freezing process, i.e. the degree to which the pre-product in the freezing pockets 5 is frozen, while the freezing pockets 5 pass through the cold brine section 2 of the freezing apparatus 1.

Thus, a number of different operational parameters of the freezing apparatus may be controlled depending on the measured torque or force values.

The thawing process may, for instance, be controlled by adjusting the temperature or the flow rate of the warm brine in the warm brine section 3 of the freezing apparatus 1 or the time spent by the freezing pockets 5 passing through the warm brine section 3 of the freezing apparatus 1. The period of time during which the freezing pockets 5 are exposed to the warm brine can also be controlled in other ways, such as for instance by using only some of the spray nozzles 9 for warm brine available in the warm brine section 3 of the freezing apparatus 1.

If the measured torque or force is higher than expected, indicating that the degree of thawing of the outermost surface of the frozen moulded products 8 is insufficient, the degree of thawing may be increased by increasing the temperature of the warm brine used in the warm brine section 3 of the freezing apparatus 1.

If, on the other hand, the measured torque or force is lower than expected, indicating excessive thawing of the outermost surface of the frozen moulded products 8, the degree of thawing may be decreased by lowering the temperature of the warm brine used in the warm brine section 3 of the freezing apparatus 1.

If the measured torque or force is higher than expected, indicating that the degree of thawing of the outermost surface of the frozen moulded products 8 is insufficient, the degree of thawing may be increased by increasing the flow rate of the warm brine used in the warm brine section 3 of the freezing apparatus 1.

If, on the other hand, the measured torque or force is lower than expected, indicating excessive thawing of the outermost surface of the frozen moulded products 8, the degree of thawing may be decreased by reducing the flow rate of the warm brine used in the warm brine section 3 of the freezing apparatus 1.

If the measured torque or force is higher than expected, indicating that the degree of thawing of the outermost surface of the frozen moulded products 8 is insufficient, the degree of thawing may be increased by increasing the time spent by the freezing pockets 5 within the warm brine section 3 of the freezing apparatus 1. This may for instance be done by reducing the speed of the moving mould table 6.

If, on the other hand, the measured torque or force is lower than expected, indicating excessive thawing of the outermost surface of the frozen moulded products 8, the degree of thawing may be decreased by reducing the time spent by the freezing pocket 5 within the warm brine section 3 of the freezing apparatus 1. This may for instance be done by increasing the speed of the moving mould table 6.

Similarly, the freezing process may, for instance, be controlled by adjusting the temperature or the flow rate of the cold brine or the time spent from the pre-product is filled into a freezing pocket 5 to the end of the exposure of that freezing pocket 5 to a cooling medium.

If the measured torque or force is lower than expected, indicating that the degree of freezing of the frozen moulded products 8 is insufficient, the degree of freezing may be increased by reducing the temperature of the cold brine used in the cold brine section 2 of the freezing apparatus 1.

If, on the other hand, the measured torque or force is higher than expected, indicating excessive freezing of the frozen moulded products 8, the degree of freezing may be decreased by increasing the temperature of the cold brine used in the cold brine section 2 of the freezing apparatus 1.

If the measured torque or force is lower than expected, indicating that the degree of freezing of the frozen moulded products 8 is insufficient, the degree of freezing may be increased by increasing the flow rate of the cold brine used in the cold brine section 2 of the freezing apparatus 1.

If, on the other hand, the measured torque or force is higher than expected, indicating excessive freezing of the frozen moulded products 8, the degree of freezing may be decreased by reducing the flow rate of the cold brine used in the cold brine section 2 of the freezing apparatus 1.

If the measured torque or force is lower than expected, indicating that the degree of freezing of the frozen moulded products 8 is insufficient, the degree of freezing may be increased by increasing the time spent from the pre-product is filled into a freezing pocket 5 to the end of the exposure of that freezing pocket 5 to a cooling medium. This may for instance be done by reducing the speed of the moving mould table 6.

And if, on the other hand, the measured torque or force is higher than expected, indicating excessive freezing of the frozen moulded products 8, the degree of thawing may be decreased by reducing the time spent from the pre-product is filled into a freezing pocket 5 to the end of the exposure of that freezing pocket to a cooling medium. This may for instance be done by increasing the speed of the moving mould table 6.

The operation of the freezing apparatus may be performed by adjusting one of these operational parameters only or by adjusting a plurality of them in combination. Preferably, for obtaining optimal results, the control is performed in such a way that the measured torque or force values are kept within ranges taking into account certain product-specific parameters, such as the size and shape of the products and the material from which the products are made.

Similarly, for obtaining optimal results, the algorithms for controlling the one or more operational parameters takes into account certain product-specific parameters, such as the size and shape of the products and the material from which the products are made.

### List of reference numbers

1. Freezing apparatus
2. Cold brine section of freezing apparatus
3. Warm brine section of freezing apparatus
4. Brine tank
5. Freezing pocket
6. Mould table
7. Part of freezing apparatus illustrated in fig. 2
8. Frozen moulded product
9. Spray nozzle for warm brine
10. Extractor tongs

## Claims

1. A method for controlling the extraction of frozen moulded products (8), such as edible ice cream products, from a freezing apparatus (1) comprising a mould table (6) with a plurality of freezing pockets (5), said method comprising the steps of:
- filling a pre-product to be frozen into the freezing pockets in the mould table,
- converting the pre-product into frozen moulded products by exposing the freezing pockets to a cooling medium,
- gripping one or more of the frozen moulded products by means of an extraction system (10) being driven by a driving arrangement comprising, for instance, one or more servo motors,
**characterized in that** it further comprises the steps of:
- extracting the one or more frozen moulded products from the freezing pockets while measuring one or more torque or force values exerted by the driving arrangement, and
- feeding back the one or more measured torque or force values for controlling one or more operational parameters of the freezing apparatus.

2. The method according to claim 1, further comprising a step of inserting a stick into the pre-product in each of the freezing pockets during the freezing process.

3. The method according to claim 2, wherein the extraction system grips each of the frozen moulded products by the respective stick.

4. The method according to any of the preceding claims, wherein the mould table is a rotating mould table.

5. The method according to any of claims 1-3, wherein the mould table comprises an in-line system of lamellae with freezing pockets arranged to be conveyed through a cooling section (2) and a heating section (3) of the freezing apparatus.

6. The method according to any of the preceding claims, wherein the one or more measured torque or force values include the maximum torque or force exerted by the driving arrangement during the extraction process.

7. The method according to any of the preceding claims, further comprising a step of loosening the frozen moulded products from the freezing pockets by exposing the freezing pockets to a heating medium.

8. The method according to claim 7, wherein the one or more controlled operational parameters include the temperature of the heating medium.

9. The method according to claim 7 or 8, wherein the one or more controlled operational parameters include the flow rate of the heating medium.

10. The method according to any of claims 7-9, wherein the one or more controlled operational parameters include the period of time during which the freezing pockets are exposed to the heating medium.

11. The method according to any of the preceding claims, wherein the one or more controlled operational parameters include the time spent from the pre-product is filled into a freezing pocket to the end of the exposure of that freezing pocket to a cooling medium.

12. The method according to claim 11, wherein the time spent is controlled by regulating a speed of a moving mould table.

13. The method according to any of the preceding claims, wherein the one or more controlled operational parameters include the temperature of the cooling medium.

14. The method according to any of the preceding claims, wherein the control of the one or more operational parameters are performed in such a way that the one or more measured torque or force values are kept within ranges, which are calculated taking into account certain product-specific parameters, such as the size and shape of the products and the material from which the products are made.

15. The method according to any of the preceding claims, wherein an algorithm for controlling the one or more operational parameters takes into account certain product-specific parameters, such as the size and shape of the products and the material from which the products are made.

16. The method according to any of the preceding claims, wherein the control of the one or more operational parameters is performed using a commonly used control loop feedback mechanism, such as PID control or PI control.

17. A method for controlling a production of frozen moulded products (8), such as edible ice cream, **characterized in that** said method comprising the steps of:
- capturing torque or force values generated when extracting said frozen moulded products from freezing pockets (5) and
- based on said torque or force values, adapting any one or a combination of the following parameters based on said torque or force values:
∘ a temperature of a cooling medium for freezing said frozen moulded products,
∘ a period of time for freezing said frozen moulded products using said cooling medium,
∘ a temperature and/or a flow rate of a heating medium for heating surfaces of said freezing pockets, such that extraction of said frozen moulded products are facilitated, or
∘ a period of time for heating said surfaces of said freezing pockets using said heating medium.

18. A freezing apparatus (1) for production of frozen moulded products (8), such as edible ice cream products, said freezing apparatus comprising
- a mould table (6) with a plurality of freezing pockets (5),
- a filling system arranged for filling a pre-product to be frozen into the freezing pockets,
- a cooling system arranged for exposing the freezing pockets to a cooling medium, and
- an extraction system (10) for gripping one or more of the frozen moulded products and extracting them from the freezing pockets, said extraction system being driven by a driving arrangement comprising, for instance, one or more servo motors,
**characterized in that** the driving arrangement is arranged for measuring one or more torque or force values exerted by the driving arrangement and for feeding back the one or more measured torque or force values for controlling one or more operational parameters of the freezing apparatus.

19. A computer program product stored on a computer readable medium comprising software instructions performing the method according to any of claims 1-16.

20. A computer program product stored on a computer readable medium comprising software instructions performing the method according to claim 17.

## Patentansprüche

1. Verfahren zum Steuern der Entnahme von gefrorenen gegossenen Produkten (8) wie etwa essbarer Eiscremeprodukte aus einer Gefriervorrichtung (1), die einen Formtisch (6) mit mehreren Gefriermulden (5) umfasst, wobei das Verfahren die folgenden Schritte umfasst:
- Einfüllen eines zu gefrierenden Vorproduktes in die Gefriermulden in dem Formtisch,
- Umwandeln des Vorprodukts in gefrorene gegossene Produkte, indem die Gefriermulden einem Kühlmedium ausgesetzt werden,
- Ergreifen eines oder mehrerer der gefrorenen gegossenen Produkte mittels eines Entnahmesystems (10), das durch eine Antriebsanordnung angetrieben wird, die beispielsweise einen oder mehrere Servomotoren umfasst, **dadurch gekennzeichnet, dass** das Verfahren ferner die folgenden Schritte umfasst:
- Entnehmen des einen oder der mehreren gefrorenen gegossenen Produkte aus den Gefriermulden, während ein oder mehrere Drehmoment- oder Kraftwerte, die durch die Antriebsanordnung ausgeübt werden, gemessen werden, und
- Rückkoppeln des einen oder der mehreren gemessenen Drehmoment- oder Kraftwerte zur Steuerung eines oder mehrerer Betriebsparameter der Gefriervorrichtung.

2. Verfahren nach Anspruch 1, das ferner einen Schritt des Einsetzens eines Stiels in das Vorprodukt in jeder der Gefriermulden während des Gefriervorgangs umfasst.

3. Verfahren nach Anspruch 2, wobei das Entnahmesystem jedes der gefrorenen gegossenen Produkte durch die jeweiligen Stiele ergreift.

4. Verfahren nach einem der vorhergehenden Ansprüche, wobei der Formtisch ein sich drehender Formtisch ist.

5. Verfahren nach einem der Ansprüche 1-3, wobei der Formtisch ein der Reihe nach angeordnetes System von Lamellen umfasst, bei dem Gefriermulden so angeordnet sind, dass sie durch einen Kühlabschnitt (2) und einen Heizabschnitt (3) der Gefriervorrichtung transportiert werden.

6. Verfahren nach einem der vorhergehenden Ansprüche, wobei der eine oder die mehreren gemessenen Drehmoment- oder Kraftwerte das maximale Drehmoment oder die maximale Kraft, die während des Entnahmevorgangs durch die Antriebsanordnung ausgeübt wird, umfassen.

7. Verfahren nach einem der vorhergehenden Ansprüche, das ferner einen Schritt des Lösens der gefrorenen gegossenen Produkte aus den Gefriermulden umfasst, indem die Gefriermulden einem Heizmedium ausgesetzt werden.

8. Verfahren nach Anspruch 7, wobei der eine oder die mehreren gesteuerten Betriebsparameter die Temperatur des Heizmediums umfassen.

9. Verfahren nach Anspruch 7 oder 8, wobei der eine oder die mehreren gesteuerten Betriebsparameter die Durchflussmenge des Heizmediums umfassen.

10. Verfahren nach einem der Ansprüche 7-9, wobei der eine oder die mehreren gesteuerten Betriebsparameter die Zeitdauer umfassen, während der die Gefriermulden dem Heizmedium ausgesetzt sind.

11. Verfahren nach einem der vorhergehenden Ansprüche, wobei der eine oder die mehreren gesteuerten Betriebsparameter die Zeit umfassen, die von dem Zeitpunkt, zu dem das Vorprodukt in eine Gefriermulde gefüllt wird, bis zu dem Zeitpunkt, zu dem die Gefriermulde einem Kühlmedium nicht mehr ausgesetzt ist, verstrichen ist.

12. Verfahren nach Anspruch 11, wobei die verstrichene Zeit durch Regeln einer Geschwindigkeit einer Bewegung des Formtischs gesteuert wird.

13. Verfahren nach einem der vorhergehenden Ansprüche, wobei der eine oder die mehreren gesteuerten Betriebsparameter die Temperatur des Kühlmediums umfassen.

14. Verfahren nach einem der vorhergehenden Ansprüche, wobei die Steuerung des einen oder der mehreren Betriebsparameter so durchgeführt wird, dass der eine oder die mehreren gemessenen Drehmoment- oder Kraftwerte innerhalb von Bereichen gehalten werden, die berechnet werden, indem bestimmte produktspezifische Parameter wie etwa die Größe und Form der Produkte und das Material, aus dem die Produkte hergestellt sind, berücksichtigt werden.

15. Verfahren nach einem der vorhergehenden Ansprüche, wobei ein Algorithmus zum Steuern des einen oder der mehreren Betriebsparameter bestimmte produktspezifische Parameter wie etwa die Größe und Form der Produkte und das Material, aus dem die Produkte hergestellt werden, berücksichtigt.

16. Verfahren nach einem der vorhergehenden Ansprüche, wobei die Steuerung des einen oder der mehreren Betriebsparameter unter Verwendung eines häufig verwendeten Regelkreis-Rückkopplungsmechanismus wie etwa einer PID-Steuerung oder einer PI-Steuerung durchgeführt wird.

17. Verfahren zum Steuern einer Produktion von gefrorenen gegossenen Produkten (8) wie etwa essbarer Eiscreme, **dadurch gekennzeichnet, dass** das Verfahren die folgenden Schritte umfasst:
- Erfassen von Drehmoment- oder Kraftwerten, die erzeugt werden, wenn die gefrorenen gegossenen Produkte aus Gefriermulden (5) entnommen werden, und
- anhand dieser Drehmoment- oder Kraftwerte Anpassen eines oder einer Kombination der folgenden Parameter anhand der Drehmoment- oder Kraftwerte:
• eine Temperatur eines Kühlmediums zum Gefrieren der gefrorenen gegossenen Produkte,
• eine Zeitdauer zum Gefrieren der gefrorenen gegossenen Produkte unter Verwendung des Kühlmediums,
• eine Temperatur bzw. eine Durchflussmenge eines Heizmediums zum Erhitzen von Oberflächen der Gefriermulden, so das ein Entnehmen der gefrorenen gegossenen Produkte erleichtert wird, oder
• eine Zeitdauer zum Erhitzen der Oberflächen der Gefriermulden unter Verwendung des Heizmediums.

18. Gefriervorrichtung (1) zur Produktion von gefrorenen gegossenen Produkten (8) wie etwa essbarer Eiscremeprodukte, wobei die Gefriervorrichtung Folgendes umfasst:
- einen Formtisch (6) mit mehreren Gefriermulden (5),
- ein Befüllungssystem, das ausgelegt ist, ein zu gefrierendes Vorprodukt in die Gefriermulden zu füllen,
- ein Kühlsystem, das so ausgelegt ist, dass die Gefriermulden einem Kühlmedium ausgesetzt sind, und
- ein Entnahmesystem (10) zum Ergreifen eines oder mehrerer gefrorener gegossener Produkte und zum Entnehmen dieser Produkte aus den Gefriermulden, wobei das Entnahmesystem durch eine Antriebsanordnung angetrieben wird, die beispielsweise einen oder mehrere Servomotoren umfasst,
**dadurch gekennzeichnet, dass** die Antriebsanordnung zum Messen eines oder mehrerer Drehmoment- oder Kraftwerte, die durch die Antriebsanordnung ausgeübt werden, und zum Rückkoppeln des einen oder der mehreren gemessenen Drehmoment- oder Kraftwerte zum Steuern eines oder mehrerer Betriebsparameter der Gefriervorrichtung ausgelegt ist.

19. Computerprogrammprodukt, das auf einem computerlesbaren Medium gespeichert ist, das Softwareanweisungen umfasst, die das Verfahren nach einem der Ansprüche 1-16 durchführen.

20. Computerprogrammprodukt, das auf einem computerlesbaren Medium gespeichert ist, das Softwareanweisungen umfasst, die das Verfahren nach Anspruch 17 durchführen.

## Revendications

1. Procédé de contrôle de l'extraction de produits moulés congelés (8), tels que des produits comestibles à base de crème glacée, d'un appareil de congélation (1) comprenant une table de moulage (6) avec une pluralité de poches de congélation (5), ledit procédé comprenant les étapes consistant à :
- remplir avec un pré-produit à congeler les poches de congélation dans la table de moulage,
- transformer le pré-produit en produits moulés congelés en exposant les poches de congélation à un milieu réfrigérant,
- saisir un ou plusieurs des produits moulés congelés au moyen d'un système d'extraction (10) entraîné par un agencement d'entraînement comprenant, par exemple, un ou plusieurs servomoteurs,
**caractérisé en ce qu'**il comprend en outre les étapes consistant à :
- extraire le ou les produits moulés congelés des poches congélation tout en mesurant une ou plusieurs valeurs de couple ou de force exercées par l'agencement d'entraînement, et
- renvoyer la ou les valeurs de couple ou de force mesurées pour contrôler un ou plusieurs paramètres opérationnels de l'appareil de congélation.

2. Procédé selon la revendication 1, comprenant en outre une étape d'insertion d'un bâton dans le pré-produit dans chacune des poches de congélation pendant le processus de congélation.

3. Procédé selon la revendication 2, dans lequel le système d'extraction saisit chacun des produits moulés congelés par le bâton respectif.

4. Procédé selon l'une quelconque des revendications précédentes, dans lequel la table de moulage est une table de moulage rotative.

5. Procédé selon l'une quelconque des revendications 1 à 3, dans lequel la table de moulage comprend un système aligné de lamelles avec des poches de congélation agencé pour être transporté à travers une section de refroidissement (2) et une section de chauffage (3) de l'appareil de congélation.

6. Procédé selon l'une quelconque des revendications précédentes, dans lequel la ou les valeurs de couple ou de force mesurées comportent le couple maximal ou la force maximale exercées par l'agencement d'entraînement pendant le processus d'extraction.

7. Procédé selon l'une quelconque des revendications précédentes, comprenant en outre une étape de détachement des produits moulés congelés des poches de congélation par exposition des poches de congélation à un milieu chauffant.

8. Procédé selon la revendication 7, dans lequel le ou les paramètres opérationnels contrôlés comportent la température du milieu chauffant.

9. Procédé selon la revendication 7 ou 8, dans lequel le ou les paramètres opérationnels contrôlés comportent le débit du milieu chauffant.

10. Procédé selon l'une quelconque des revendications 7 à 9, dans lequel le ou les paramètres opérationnels contrôlés comportent le laps de temps pendant lequel les poches de congélation sont exposées au milieu chauffant.

11. Procédé selon l'une quelconque des revendications précédentes, dans lequel le ou les paramètres opérationnels contrôlés comportent le temps écoulé depuis le remplissage avec le pré-produit d'une poche de congélation jusqu'à la fin de l'exposition de cette poche de congélation à un milieu réfrigérant.

12. Procédé selon la revendication 11, dans lequel le temps écoulé est contrôlé en régulant une vitesse d'une table de moulage mobile.

13. Procédé selon l'une quelconque des revendications précédentes, dans lequel le ou les paramètres opérationnels contrôlés comportent la température du milieu réfrigérant.

14. Procédé selon l'une quelconque des revendications précédentes, dans lequel le contrôle du ou des paramètres opérationnels est effectué de telle sorte que la ou les valeurs de couple ou de force mesurées sont maintenues à l'intérieur de gammes qui sont calculées en tenant compte de certains paramètres spécifiques des produits, tels que la taille et la forme des produits et la matière à partir de laquelle les produits sont fabriqués.

15. Procédé selon l'une quelconque des revendications précédentes, dans lequel un algorithme de contrôle du ou des paramètres opérationnels tient compte de certains paramètres spécifiques des produits, tels que la taille et la forme des produits et la matière à partir de laquelle les produits sont fabriqués.

16. Procédé selon l'une quelconque des revendications précédentes, dans lequel le contrôle du ou des paramètres opérationnels est effectué au moyen d'un mécanisme d'asservissement à boucle de contrôle communément utilisé, tel qu'un contrôle PID ou un contrôle PI.

17. Procédé de contrôle d'une production de produits moulés congelés (8), tels que de la crème glacée comestible, **caractérisé en ce que** ledit procédé comprend les étapes consistant à :
- capturer des valeurs de couple ou de force générées lors de l'extraction desdits produits moulés congelés de poches de congélation (5) et
- sur la base desdites valeurs de couple ou de force, adapter un quelconque ou une combinaison des paramètres suivants sur la base desdites valeurs de couple ou de force :
∘ une température d'un milieu réfrigérant pour congeler lesdits produits moulés congelés,
∘ un laps de temps pour congeler lesdits produits moulés congelés au moyen dudit milieu réfrigérant,
∘ une température et/ou un débit d'un milieu chauffant pour chauffer les surfaces desdites poches de congélation, de telle sorte que l'extraction desdits produits moulés congelés soit facilitée, ou
∘ un laps de temps pour chauffer lesdites surfaces desdites poches de congélation au moyen dudit milieu chauffant.

18. Appareil de congélation (1) pour la production de produits moulés congelés (8), tels que des produits comestibles à base de crème glacée, ledit appareil de congélation comprenant
- une table de moulage (6) avec une pluralité de poches de congélation (5),
- un système de remplissage agencé pour remplir avec un pré-produit à congeler les poches de congélation,
- un système de refroidissement agencé pour exposer les poches de congélation à un milieu réfrigérant, et
- un système d'extraction (10) pour saisir un ou plusieurs des produits moulés congelés et les extraire des poches de congélation, ledit système d'extraction étant entraîné par un agencement d'entraînement comprenant, par exemple, un ou plusieurs servomoteurs, **caractérisé en ce que** l'agencement d'entraînement est agencé pour mesurer une ou plusieurs valeurs de couple ou de force exercées par l'agencement d'entraînement et pour renvoyer la ou les valeurs de couple ou de force mesurées pour contrôler un ou plusieurs paramètres opérationnels de l'appareil de congélation.

19. Produit-programme informatique stocké sur un support lisible par ordinateur comprenant des instructions logicielles effectuant le procédé selon l'une quelconque des revendications 1 à 16.

20. Produit-programme informatique stocké sur un support lisible par ordinateur comprenant des instructions logicielles effectuant le procédé selon la revendication 17.
